# EUROPEAN PATENT APPLICATION

(11) **EP 3 300 045 A1**
(43) Date of publication of application: **28.03.2018**
(21) Application number: 17191389.0
(22) Date of filing: 15.09.2017
(51) Int. Cl.: G08B 13/19, G08B 13/196, H04N 5/33, H04N 7/18, H04N 5/265

(54) **SYSTEM AND METHOD FOR SURVEILLING A SCENE COMPRISING AN ALLOWED REGION AND A RESTRICTED REGION**

(30) Priority: 26.09.2016 US 201615276603
(71) Applicant: Mobotix AG, 67722 Winnweiler (DE)
(72) Inventor: GABEL, Oliver, 67722 Winnweiler (DE); KABS, Daniel, 67722 Winnweiler (DE); RENNER, Alexander, 67722 Winnweiler (DE)
(74) Representative: Hersina, Günter

(57) **Abstract**

A system and a method for surveilling a scene including an allowed region and a restricted region are disclosed. In an embodiment, the system includes a visual sensor configured to capture a visual image of a scene, a thermal sensor configured to capture a thermal image of the scene and a distance measuring sensor configured to capture a distance image of the scene, the scene comprising an allowed region and a restricted region. The system further includes a processor configured to generate a combined image based on the visual image, the thermal image and the distance image, wherein an object in the scene is displayed as a representation in a visual image when in the allowed region and displayed as a representation in a thermal image when in the restricted region.

## Description

### TECHNICAL FIELD

The present invention relates generally to a system and method for surveilling a scene, and, in particular embodiments, to a system and method for surveilling a scene comprising an allowed region and a restricted region.

### BACKGROUND

Surveillance systems comprising a visual image sensor and a thermal image sensor are known.

### SUMMARY

In accordance with an embodiment of the present invention, a surveillance system comprises a visual sensor configured to capture a visual image of a scene, a thermal sensor configured to capture a thermal image of the scene and a distance measuring sensor configured to capture a distance image of the scene, the scene comprising an allowed region and a restricted region. The system further comprises a processor configured to generate a combined image based on the visual image, the thermal image and the distance image, wherein an object in the scene is displayed as a representation in a visual image when in the allowed region and displayed as a representation in a thermal image when in the restricted region.

In accordance with another embodiment of the present invention, a method for surveilling a scene having an allowed region and a restricted region comprises capturing a visual image of a scene, capturing a thermal image of the scene, and capturing a distance image of the scene, the scene comprising an allowed region and a restricted region. The method further comprises generating a combined image based on the visual image, the thermal image and the distance image, wherein an object in the scene is displayed as a representation in a visual image when in the allowed region and displayed as a representation in a thermal image when in the restricted region.

In accordance with yet another embodiment of the present invention, a camera comprises a processor and a computer readable storage medium storing programming for execution by the processor. The programming includes instructions to capture a visual image of a scene, capture a thermal image of the scene and capture a distance image of the scene, the scene comprising an allowed region and a restricted region. The programming further includes instructions to generate a combined image based on the visual image, the thermal image and the distance image, wherein an object in the scene is displayed as a representation in a visual image when in the allowed region and displayed as a representation in a thermal image when in the restricted region.

### BRIEF DESCRIPTION OF THE DRAWINGS

For a more complete understanding of the present invention, and the advantages thereof, reference is now made to the following descriptions taken in conjunction with the accompanying drawings, in which:
Figure 1A shows a side view of a surveillance system location;
Figure 1B shows a top view of a surveillance system location;
Figure 1C shows a displayed combined image of a scene;
Figure 1D shows a displayed combined image of another scene;
Figure 2 shows an installation configuration of surveillance camera(s) at a location;
Figure 3 shows field of views of the different surveillance camera(s);
Figure 4 shows a method for providing a combined image;
Figure 5 shows an offset between an image of a visual image camera and an image of a thermal image camera;
Figure 6A shows a network configuration;
Figure 6B shows another network configuration;
Figure 7 shows a block diagram of a network camera; and
Figures 8A-8C show a masking map applied to a 3 dimensional image.

### DETAILED DESCRIPTION OF ILLUSTRATIVE EMBODIMENTS

Video surveillance systems that monitor private and public properties may be in tension between security needs and general personal rights. This is especially true for surveillance systems that are located on a private property but capture not only activities on the private property but also activities on a neighboring property such as public land. For example, cameras that surveille the perimeter of the private property may inevitably surveil the border area and the neighboring property. The video surveillance system can restrict the capturing or the displaying of scenes outside the private property by masking off activities outside of the private property. For example, the viewing angle of the cameras can be restricted by mechanical apertures or lens covers. Alternatively, areas of the displayed image can be darkened or blackened.

Embodiments of the invention provide a surveillance system comprising a visual sensor, a thermal sensor and a distance measuring sensor. The images of a scene captured by the visual sensor and the thermal sensor may be assembled to form a combined image with input from the distance measuring sensor. The combined image may be masked to reflect an allowed region and a restricted region of a scene. The distance measuring sensor may be a three dimensional measurement sensor (3D sensor). The distance measuring sensor is able to determine whether an object moving through the scene is moving within the allowed region, moving within the restricted region or moving between the allowed and restricted regions. The object here may include subjects such as people or animals and movable objects such as vehicles or other movable devices. The distance measurement sensor is able to detect and determine a three-dimensional coordinate set of an object in order to determine whether the object or subject is within or outside the perimeter.

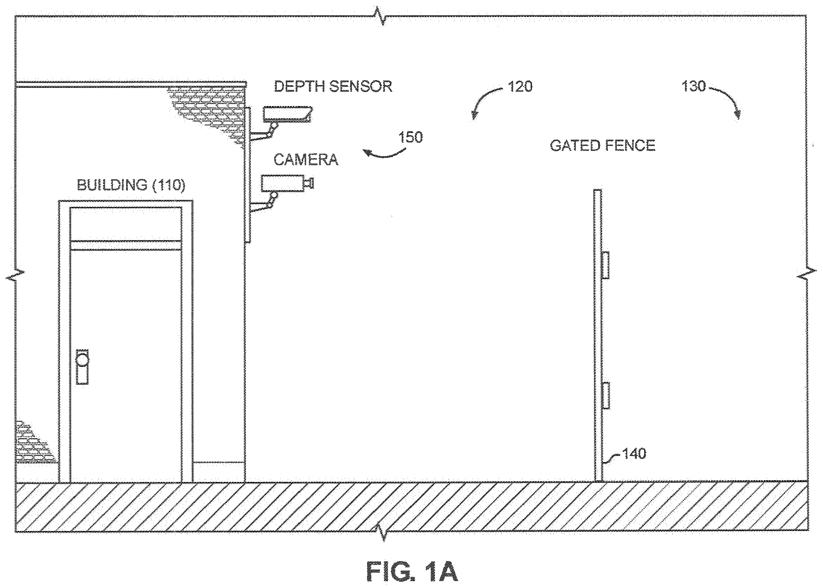

Figure 1A shows a typical surveillance location. The surveillance camera(s) 150 may be mounted at a building 110 and facing an area outside the building covering an area of the property belonging to the building 120 (inside area or allowed region) and also covering an area of a neighboring property 130 (outside area; public area; restricted region) separated by a border 140. The two regions 120, 130 may be separated by a wall, a fence or an obstacle. In various embodiments, the border 140 may not be clearly marked by a visual sign or barrier. In a particular embodiment, the border location of interest maybe a gate in a fence.

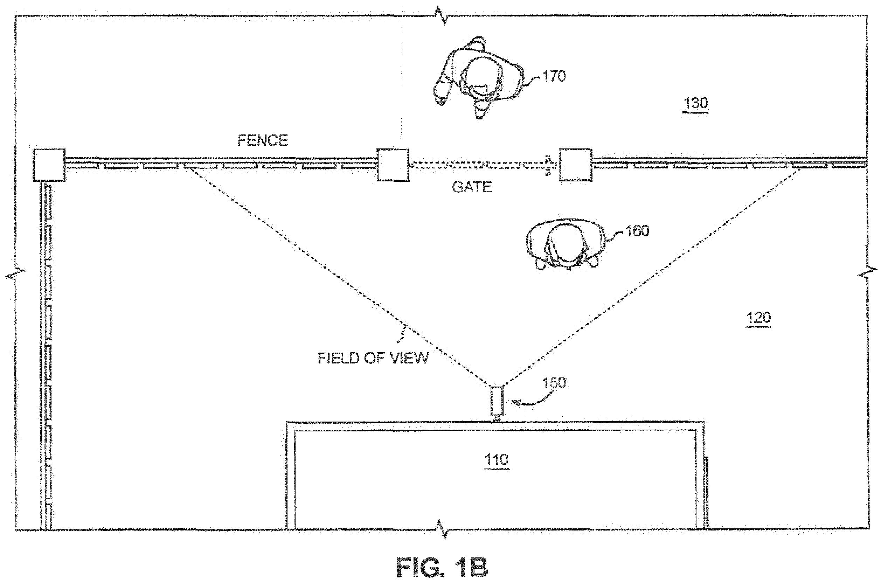

In various embodiments the surveillance camera(s) 150 are located at the building 110 or near the building 110 and surveille the border 140 of the property where the building 110 is located. The surveillance camera(s) 150 face the inside 120 and outside areas 130. In an embodiment the surveillance camera(s) 150 faces the inside 120 and outside areas 130 in a substantially orthogonal angle in a horizontal plan parallel to the ground. The surveillance camera(s) may face the inside and outside areas 120, 130 in a different angle in other embodiments. The camera(s) 150 may face the inside and outside areas (allowed and restricted regions) 120, 130 in their respective field of view (see discussion later). A top view of the surveillance location is shown in Figure 1B. The security camera(s) 150 captures object 160 standing or moving within the property perimeter 120. The security camera(s) 150 captures object 170 standing or moving outside 130 of the perimeter 140. The two objects 160, 70 are represented differently in a combined image of the captured scene. Object 160 is clearly shown by a visual representation of the combined image while object 170 is shown by a thermal representation.

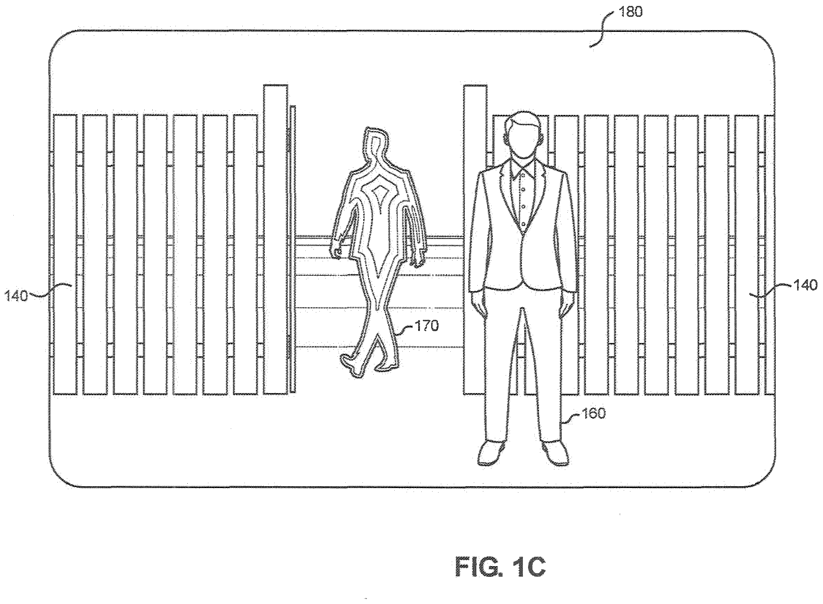

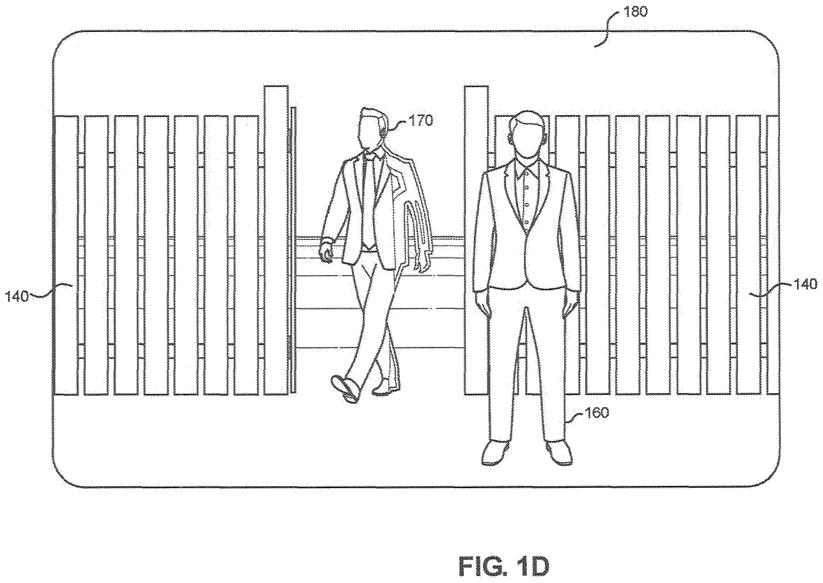

Figure 1C shows a displayed combined image 180 at a monitoring station or at the camera(s) 150. The (displayed) combined image 180 shows the situation of Figure 1B. As can be seen from Figure 1C, object 160 is displayed in a visual representation and object 170 is displayed in a thermal representation. The combined image 180 has the advantage that object 160 is displayed completely as a visual (colored) object and not partially as a visual object and partially as a thermal object. Figure 1D shows the situation where object 170 is about to enter from the outside area (restricted region) 130 to the inside area (allowed region) 120 by crossing the perimeter 140. As can be seen, portions of object 170 are depicted as a visual object and portions of the object 170 are depicted as a thermal object.

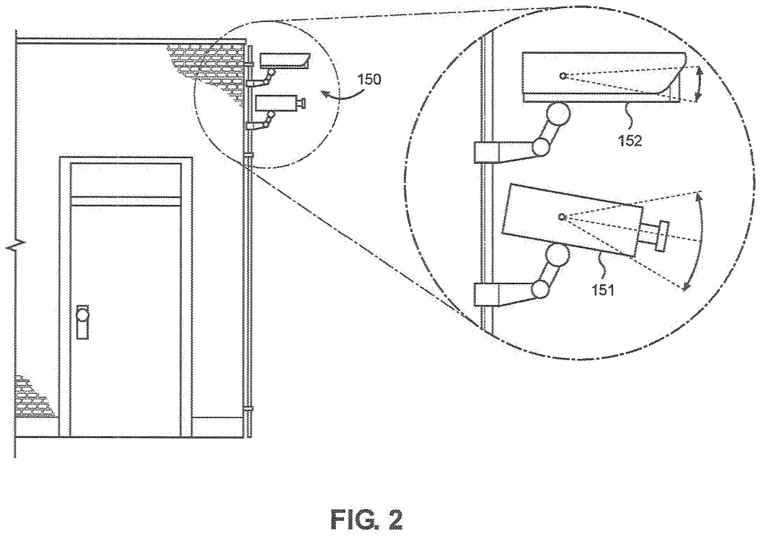

Figure 2 shows an installation of the surveillance camera(s) 150 at a building or pole so that they can cover the same scene. The surveillance camera(s) 150 may include one or more visual cameras (with one or more visual image sensors) and one or more thermal cameras (with one or more thermal image sensors). The surveillance camera(s) may further include one or more distance measuring devices (with one or more measurement sensors). The embodiment shown in Figure 2 shows a visual/thermal camera 151 and a three-dimensional measuring device 152.

The three different sensors (visual image sensor, thermal image sensor and distance measuring sensor) may be located within one single housing (a single camera) or may be located in two or more different housings (several cameras). For example, a visual image sensor and a thermal image sensor may be located in a single housing and the distance measuring sensor is located in a separate single housing.

The visual camera comprises a visual image sensor that is a "normal" image sensor. The visual image sensor produces an image that is similar to what is seen by a human eye. The visual image sensor may be configured to receive and process signals in the visible spectrum of light such as between 390 nm to 700 nm. The visual image sensor may be a CCD sensor or CMOS sensor. The visual camera may be a video camera. The visual image sensor could be a color image sensor, color-independent intensity image sensor or grayscale sensor.

The thermal camera comprises a thermal image sensor. Thermal image sensor is sensitive to radiation in the infrared spectrum and produces a thermal image or a thermogram, showing heat radiated by different objects (such as a microbolometer). The thermal image sensor may be configured to receive signals in the infrared spectrum or infrared radiation in the spectral range between about 3 µm and 15 µm (mid infrared) or between about 15 µm and 1mm (far infrared). Images captured by the thermal camera may not infringe on the privacy of third parties. The captured images of the thermal cameras allow detection and classification of objects in broad categories such as humans, animals, vehicles, etc. However, these sensors do not provide the identification of individuals. In other words, the thermal sensor allows to capture that something is happening and what is happening but does not allow to identify the object (person) doing what is happening. Moreover, the thermal camera can "see" in total darkness without any lighting.

The distance measuring device may comprise a distance measurement sensor. The distance measuring sensor may be a 3D sensor or a sensor that is configured to capture depth data (3D data or a depth image for a depth camera). The distance measuring device is configured to determine whether or not an object is within a perimeter or is outside that perimeter. For example, the distance measuring device such as a depth camera (especially a time-of-flight camera) can incorporate additional imaging sensors to generate a thermal or visual image of the scene in addition to the depth image.

The three dimensions at each pixel in a depth image of a scene correspond to the x and y coordinates in the image plane, and a z coordinate that represents the depth (or distance) of that physical point from the distance measuring sensors. Examples of depth sensors/cameras include stereoscopic sensors/cameras, structured light sensors/cameras, and time-of-flight (TOF) sensors/cameras. A stereoscopic sensor/camera performs stereo imaging in which 2D images from two (or more) passive image sensors (e.g. visual image sensors) are used to determine a depth image from disparity measurements between the two 2D images. A structured light sensor/camera projects a known pattern of light onto a scene and analyzes the deformation of the pattern from striking the surfaces of objects in the scene to determine the depth. A TOF sensor/camera emits light or laser pulses into the scene and measures the time between an emitted light pulse and the corresponding incoming light pulse to determine scene depth. Other 3D imaging technologies may also be used to gather depth data of a scene. For example, LiDAR (Light Detection And Ranging) sensor/camera emits light to scan the scene and calculate distances by measuring the time for a signal to return from an object hit by the emitted light. By taking into account the angle of the emitted light, relative (x, y, z) coordinates of the object with respect to the LiDAR sensor can be calculated and provided representing the 3D data of the object. Is the specific location of the LiDAR sensor (on the property) known, absolute (x, y, z) coordinates can be calculated.

A camera (the housing) may not only include the image/thermal or measurement sensors but may also include any other sensing component (such as an alarm sensor), optical components or equipment (such as lenses) and further electronic products to produce images or transmit (image) data or signals. For example, to minimize deviation, the sensors in a single camera could gather electromagnetic radiation from a common optical path that is split with a mirror, prism or lens before entering the sensors.

In order to produce images of the same view of a scene, the different sensors or cameras may be placed in close proximity to each other (distance up to 50 cm or up to 3 meters). However, in other embodiments the different cameras or sensors could be placed in different locations as long as they cover the same scene.

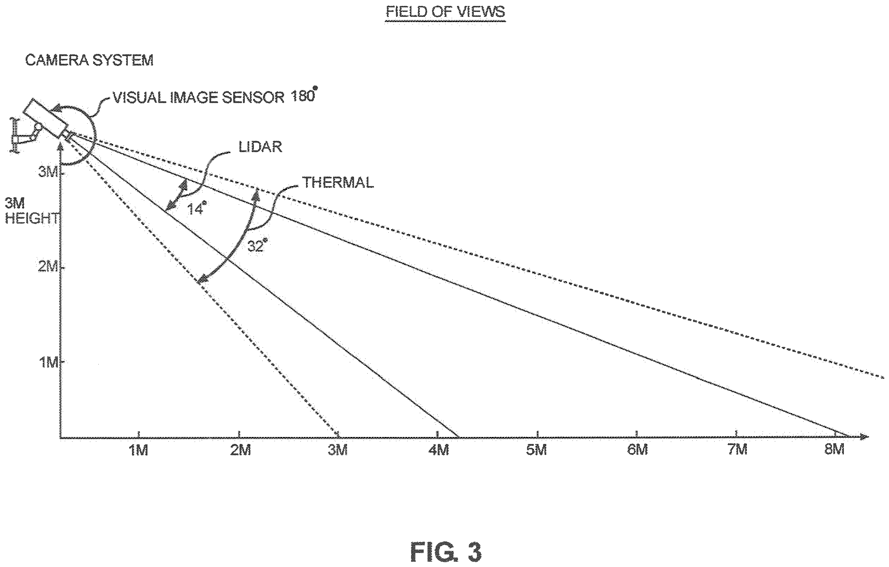

Figure 3 shows a scene and surveillance sensors covering the scene. The different sensor may have different field of views. The different sensors/cameras may be (coarsely) adjusted to cover a scene (an area of interest). For example, the visual image sensor/camera has the broadest maximum field viewing angle, e.g., 180°/180° (horizontal /vertical), the thermal image sensor/camera has a maximum field viewing angle, e.g., 45°/32°, and the distance measuring device/sensor has the smallest maximum field viewing angle, e.g., 180°/14°. In an embodiment, the cameras have to be adjusted such that thermal camera and the visual camera have the essentially the same view and capture images of essential the same scene, meaning that a specific pixel in the thermal image depicts the same area as the corresponding pixel - or pixels in case there is a difference in resolution - of the visual image. The same holds true for the distance measuring sensor (e.g., 3D sensor). In various embodiments, the field viewing angle of the distance measuring sensor may be within the field viewing angle of the thermal image camera and the field viewing angle of the thermal image camera may be within the field viewing angle of the visual image camera. Deviations from complete overlap may be acceptable between the views that the sensors/cameras capture, as long as there is a reasonable overlap between the views so that it is possible to match objects or pixels of the images. If the field of view of the 3D sensor/camera and the visual image/thermal sensors/cameras differ substantially then the combined image according to embodiments can only be provided for the view of the scene covered by the measuring sensor/camera (e.g., 3D sensor). In other embodiments, the intersection of the views of the scene of all these sensors may provide the view of the scene. In yet another embodiment, the field of view above the field of view of the distance measuring (toward the horizon) device may be automatically represented by captured images of the thermal sensor and the field of view below the field of view of the distance measuring device (towards the ground/floor) may be automatically represented by the captured images of the visual sensor.

In some embodiments the field of view (mainly in the vertical direction) of the 3D sensor may be a limiting factor. In alternative embodiments the field of view of the thermal sensor maybe the limiting factor.

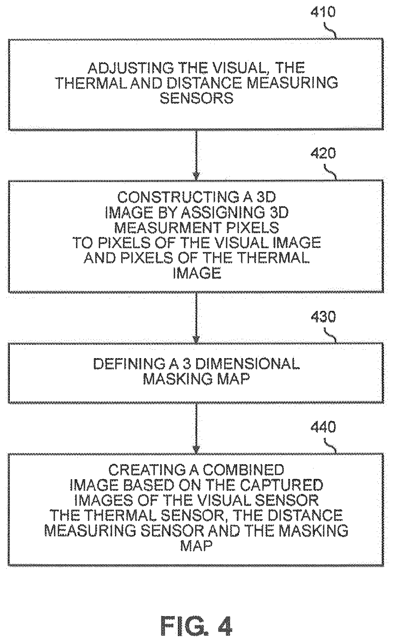

Figure 4 shows a method 400 for providing a combined picture of a visual sensor, a thermal sensor and a distance measuring sensor. The sensors capture images and distances of a scene. The scene including an allowed region and a restricted region.

In a first step 410 the sensors are mechanically installed to cover a scene or a region of interest. This means that the visual and thermal sensors and the distance measuring sensor (3D sensor) are coordinated and adjusted with respect to each other. If the units are separate they must be aligned when installed so that they provide the best possible and most suitable match on the scene. As mentioned above, the unit with the smallest field of view (angle) is the limiting factor. This is often the distance measuring device (e.g., 3D sensor). According to an embodiment, Figure 3 shows a possible arrangement of the different sensors.

In a second step 420, the sensors are calibrated. The sensors are calibrated for reliable functioning of the surveillance system. According to embodiments, the sensors are calibrated (and a 3 dimensional image is constructed) by assigning measurement points of the image measuring device (e.g., 3D sensor) to visual image pixels and thermal image pixels. In other words, the pixels of the captured 3D image (e.g., measurement points, special positions, or (x, y, z) space coordinates) are assigned to the pixels of the captured image(s) of the image sensor and the pixels of the captured image(s) of the thermal sensor. The pixels of the various captured images must be known in order to correctly assign or map them to each other. In various embodiments, the pixels of the 3D image (e.g., (x, y, z) space coordinates) are clearly or definitely mapped to the pixels of the thermal image and the visual image. In various embodiments, each identified spatial position is mapped to a pixel(s) in the thermal image and pixel(s) in the color image: (x, y-z) → pixel thermal image (xt, yt) and (x, y, z) →pixel color (xv, yv).

The calibration of the sensors may be done for a plurality of sampling points in the scene. For example, during the calibration phase, a special test object may be moved to different sampling positions in the scene. The sensors (visual, thermal and 3D sensor) can identify and record the special test object (specimen). For example, the test object(specimen) may be a colored, highly reflective specimen with a temperature different from the ambient temperature. The size of the test specimen may be selected such that the specimen has a size of several pixels at a maximum distance from the sensors (but still within the image region of interest) and that it can be detected by the distance measuring device (e.g., 3D sensor).

The test object may be moved to several positions in the scene. For example, the test object may be positioned at several locations at edges and diagonals of the region of interest. Alternatively, a random coverage of the region of interest is possible too. At all these positions, each sensor detects the test object, and for each position a color image, a thermal image and a spatial position is captured. As discussed supra, based on these measurements each identified spatial position is mapped to pixels in the thermal image and pixels in the color image: (x, y-z) → pixel thermal image (xt, yt) and (x, y, z) → pixel color (xv, yv). Values between the selected positions (e.g., edges or certain positions on the diagonals) of the test object can be calculated by interpolation.

The different sensors may have different resolutions. In various embodiments, the measurement point (pixel of the measurement image) of the distance measurement sensor may be assigned to a plurality of pixels of visual image of the visual sensor. However, the measurement point of the distance sensor may not be assignable to a pixel of the thermal image of the thermal camera, or alternatively, several measurement points of the distance sensor may be assigned to a single pixel of the thermal image. This effect needs to be considered when the combined image is constructed. For example, the "intermediate pixels" may be calculated for an improved thermal image so that a thermal pixel (if necessary an "intermediate pixel") can be assigned to each measurement point (pixel of the measurement image).

In an alternative embodiment, the visual and thermal sensors can be directly calibrated with respect to each other. Calibration can be carried out by overlapping the captured images of the visible and the thermal sensors. This may include superimposing the two images of the two sensors and displaying the superimposed (or mixed) image as a single image. For example, the image of the visual image sensor (or color sensor) maybe used as background and the image of the thermal image sensor is superimposed with 50% opacity (or an opacity between 30% and 70%, etc.). Moving the thermal image with respect to the color image (up, down, left, right). Moreover, the image of the thermal sensor may be scaled (increasing, scaling down) in order to compensate for different angles of the view of the lens. The overlapping can be manually performed by using operating control elements.

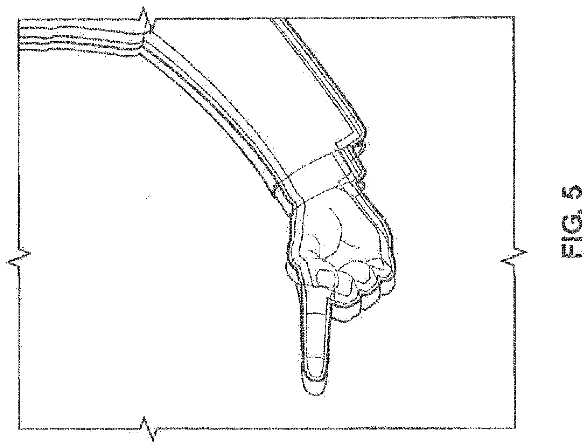

The superposition of the thermal image on the visual image is calibrated for a specific distance, e.g., several meters. For probe objects that are substantially closer to or further away from the sensors an offset appears between the thermal image and the color image. In a particular example, (Figure 5) the color sensor is horizontally offset from the thermal sensor, and hence, a horizontal offset exists between a probe object (fingertip) in the thermal image and the probe object in the color image. The two images are adjusted such that the probe object (fingertip) is congruent in the two images and such that the offset is removed (with respect to the horizontal offset). Similarly, an offset exists with respect to the depth of the color image and the thermal image. The two images are again adjusted such that the offset is removed (with respect to the depth offset).

In various embodiments, the sensors need to be recalibrated in certain time instances because environmental effects (temperature, wind, etc.) can impact the accuracy of the surveillance system. Such a recalibration may be performed once a month, one a year or once every two to three years. In other embodiments the recalibration is a permanent or continuous recalibration. In various embodiments, moving objects in the scene can be identified (measured, captured) by all the sensors and can be used for recalibration of these sensors.

In the next step, at 430, a masking map (masking card) of the scene to be the monitored is defined and generated. The masking map reflects the allowed region and the restricted region of the scene. The masking map may be a 3-dimensional masking map. The map may be generated by separating the 3 dimensional image of the scene constructed in the previous step 420 in two or more different portions, regions or areas. For example, the masking map may define an allowed region (fully surveilled) and a restricted region (restrictively surveilled). The two areas can be separated by a defining a separating region between the inside area and the outside area. The separating region may be a 2 dimensional plane, surface plane or hyperplane. Alternatively, the separating surface may be 3 dimensional volume. The two regions may be separated by other methods too.

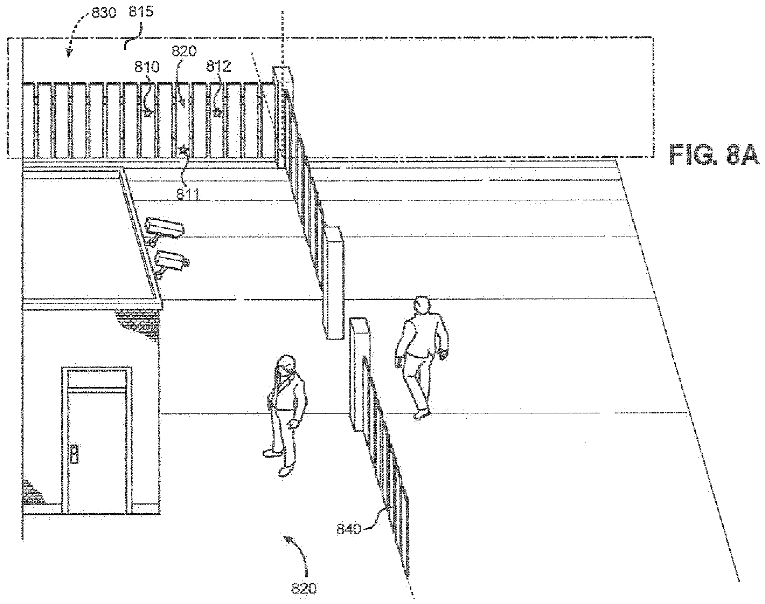

In an embodiment, shown in Figure 8A, the separation region 815 of the allowed region 820 and the restricted region 830 in the 3 dimensional masking map may be achieved by capturing a probe object at two or more locations (810, 811, and 812) on the border or perimeter 840 of the property. For example, the separation region 815 can be defined or generated as a vertical plane between a first measurement point 810 and its vertical or normal to ground plane and a second measuring point 811 and its vertical or normal to the ground.

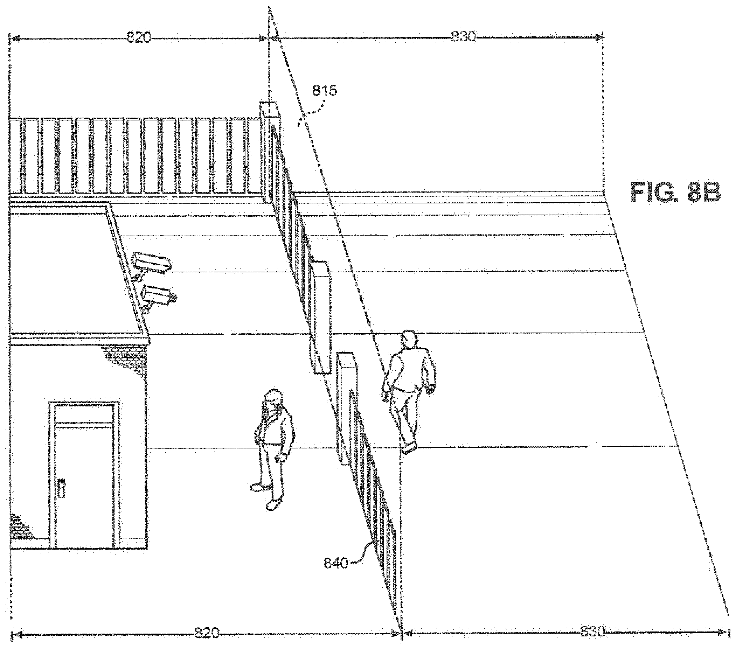

In an alternative embodiment, shown in Figure 8B, the separation region 815 of the allowed region 820 and the restricted region 830 in the 3 dimensional masking map may be achieved by marking individual points in the 3 D image. The selection of these points may not provide a separation region (e.g., plane) yet. However, a separation region 815 can be calculated based on the selected points. For example, an average plane can be calculated by a method of the least squares of the distances of each selected point to the average plane. Alternatively, individual structures can be selected describing a border or a perimeter 840. For example, structures like fences or walls may be helpful to define the separating region 815.

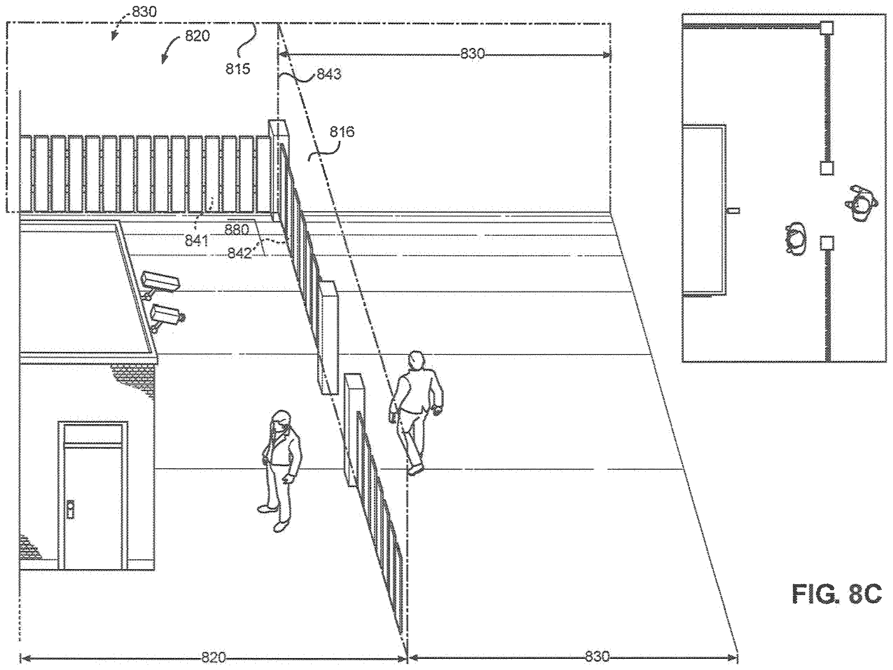

In a yet further embodiment, shown in Figure 8C, a plurality of planes 815, 816 can be defined that intersect. Afterwards, the undesired portions are removed from these planes. Complex structures may be construed with this method. For example, the planes can be selected along border portion 841 and border portion 842. The planes intersect in 843. The portion of the plane 816 beyond plane 815 (on the side 830) and the portion of the plane 815 beyond plane 816 are removed so that the bend in the border 840 can be defined. An easy way to operate with these "planes" is to use a top view of the scene. This has the advantage that the planes become lines and it is easier to work with lines. Once the structure (in the 2 D top view) has been identified the structure in the 3D view is marked.

In the next step, at 440, a combined image is generated. Based on the calibration, the system or the distance measuring sensor (e.g., 3D sensor) knows for each measurement point the corresponding pixels of the image of the visual (color) sensor and the image of the thermal sensors. For an object, detected by the distance measuring sensor (e.g., 3D-sensor) within the region of interest (scene), the 3D sensor provides the distance and spatial coordinates. By comparing the spatial coordinates of the object with the three-dimensional masking map, the processor can decide whether the object is located in the allowed region or in the restricted region and therefore, whether the object is to be represented the pixels of the thermal sensor or the pixels of the visual sensor. Based on this mapping the combined image of the thermal sensor and the visual sensor is determined and displayed. The combined image can be displayed at a monitoring station or at the camera. If the object is identified between two calibrated test points (see above at step 420, e.g., edges or certain positions on the diagonals) the object is represented by pixels of the visual image or pixels of the thermal image and these pixels are calculated by interpolation. The calculation can be based on an interpolation of the measurement point (e.g., pixel of the depth image) and/or on an interpolation of the pixels of the thermal sensor or the calculation can be based on an interpolation of the measurement point (e.g., pixel of the depth image) and/or on an interpolation of the pixels of the visual sensor. If the object is detected at one of the calibrated test points the pixels of the thermal image or the visual image are defined and no interpolation may be necessary.

In various embodiments, the method above 400 may be modified such that the combined image only displays pixels in a certain temperature range in the outside area. For example, if an object moves in the restricted area surveilled by the sensors and the object is not a living thing the object may be shown as moving in a visual representation because no privacy aspect may be violated. Only if the moving object is a human being and if the object moves in the restricted area, the combined image should display this movement by pixels of the thermal sensor. This can be achieved by setting the thermal sensor to capture only specific temperature ranges, such as a temperature range of 30 degrees Celsius to 40 degrees Celsius. Alternatively, other temperature ranges can be also selected. An advantage of this is that the displayed image provides a more complete and comprehensive picture of the scene.

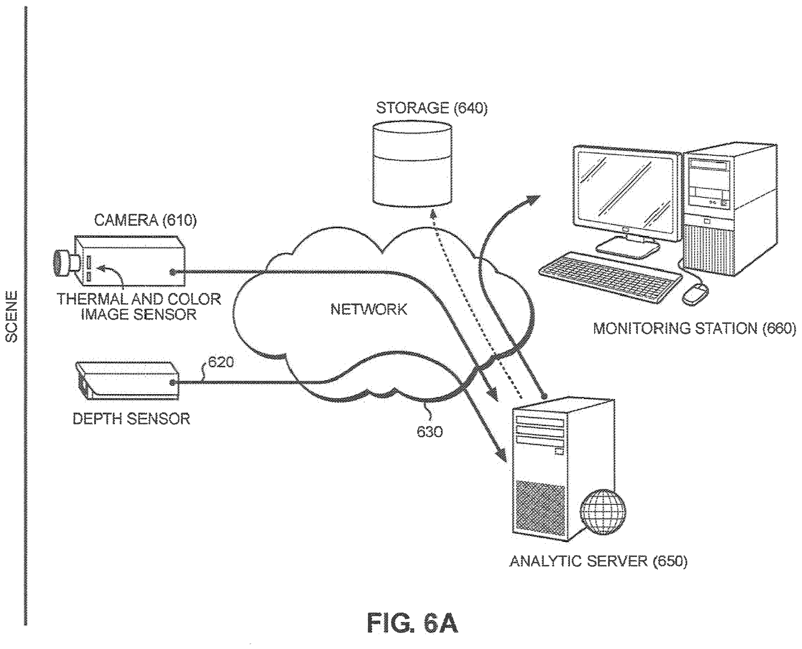

Figure 6A shows a network configuration 600 according to an embodiment. The visual image sensor and the thermal image sensor are located in the camera 610 and the distance measurement sensor (depth sensor) is located in the distance measuring device 620. The camera 610 and the measuring device 620 are two different and individual devices. They may be located next to each other (within a radius of up to 3 m) or in a distance from each other (between 10m - 20m or 20 m and 30). However, the camera 610 and the distance measuring device 620 cover the same scene. The devices 610, 620 are connected to a network 630. The network 630 may be a wireless network (such a wireless LAN network) or a wired network (LAN network). The network is also connected to a storage device 640, a server such as an analytics server 650 and a monitoring station 660. The recorded images may be stored in the storage device 640, may be calculated at the analytics server 650 and may be displayed at the monitoring station 660. The three units 640-660 may be located at the same physical location or at different physical locations. In various embodiments, a plurality of measuring devices 620 and a single camera 610 cover the scene. For example, a single camera 610 and 2 or 3 measuring devices 620 cover the scene.

The camera 610 provides color image data and thermal image data to the analytics server 650 via the network 630. The distance measuring device (3D sensor) 620 provides depth image data or 3D data to the analytics server 650 via the network 630. The analytics server 650 generates a combined thermal/color image using the color image data and the thermal data from the camera 610. The combined thermal/color image is generated based on the 3D data and masking as described in previous embodiments. The combined images can be continuously stored, stored on an alarm or based on time at the storage device 640. The combined images can also be displayed continuously, on request, or on alarm at the monitoring station 660.

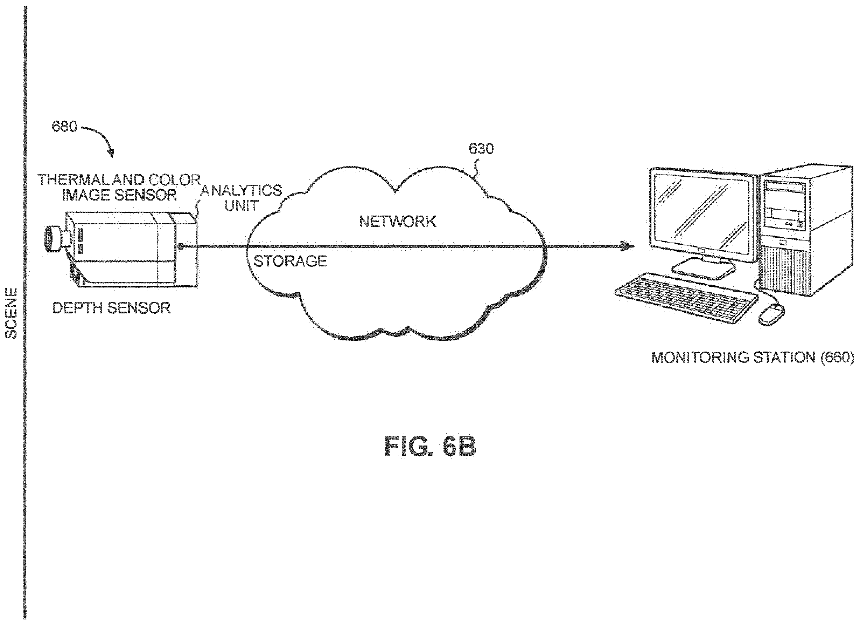

Figure 6B shows another network configuration 670 according to an embodiment. The difference between the network configuration of Figure 6A and Figure 6B is that the camera 610, the distance measuring device 620, the analytics server 650 and the storage device 640 are all integrated in one camera 680. The camera transmits the recorded combined images to the monitoring station 660 via the network. In various embodiments, a plurality of measurement sensors may be located in the camera 680. For example, the camera 680 may include 2 or 3 measurement sensors to cover the scene (for one visual image sensor and one thermal sensor). Alternatively, the camera 680 may include 4 or 5 measurement sensors to cover the scene (with one visual image sensor and two thermal sensors). The measurement sensors may be arranged that they cover a larger field of view (e.g., vertical 28° for two measurement sensors, vertical 56° for four measurement sensors, vertical 64° for two thermal image sensors).

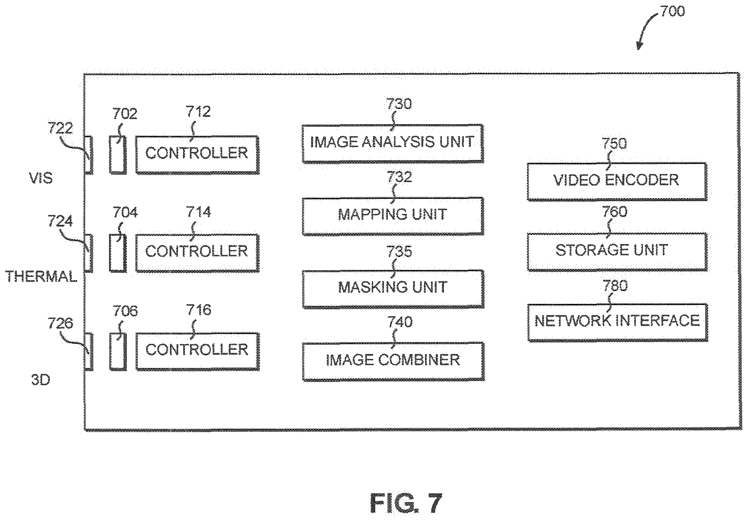

Figure 7 shows a block diagram for a camera 700 according to an embodiment. The camera 700 includes a visual image sensor 702, a thermal image sensor 704, a distance measuring sensor 706 and respective controllers 712-716 and lenses 722-726 for each sensor 702-706. The camera 700 may further include an image analysis unit 730, a mapping unit 732, a masking unit 735 and an image combiner 740. The camera 700 yet may further include a video encoder 750, a storage unit 760 and a network interface 780 (including a transmitter to transmit the image data). The camera 700 may include all these units or only a portion of these units. The function of these units (712-750) may be performed by a processor. In various embodiments, the functions of the units 730-750 may be performed by a processor and each of the controllers 712-716 are separate units independent from the processor.

The image analysis unit 730 is configured to process data acquired by the different sensors to detect moving objects present in the scene as well as the test object, even if it is not moving. Any suitable type of object detection algorithm could be used and different algorithms could be selected for different sensor types. When an object is found, the object position and pixel information as well as information whether the object is a special test object is provided. Additionally information about the observed scene may be provided by the image analysis unit (e.g., detected structures, boundaries of detected objects, walls, etc.).

The mapping unit 732 is configured to perform calibration of and the mapping between spatial measurement points captured by the distance measuring sensor and the pixels of the images captured by the thermal and visual sensors. The mapping unit may implement different algorithms to interpolate values in between the sampling points acquired for calibration.

The masking unit 735 is configured to define the three-dimensional masking map and to determine whether a position is located in the allowed region or the restricted region. The mask unit 735 may receive or access a predefined masking map definition. The masking map may also be defined by a graphical user interface operated by a user, e.g. by drawing in a 2D or 3D representation of the observed scene or by the user entering coordinates. Additional information provided by the image analysis unit 730 may be used when defining the masking map.

The image combiner is configured to generate a combined image. The image combiner receives positional data from the distance measuring sensor and image data from the visual image sensor and the thermal sensor. On the determination of the masking unit 735, the image combiner uses the appropriate pixel from the respective sensor to generate the combined image.

The video encoder 750 is configured to compress the generated image(s) in accordance with an image compression standard, such as JPEG, or in accordance with a video compression standard, such as H.264 or Motion-JPEG and delivers the compressed data on the network interface.

The network interface 780 is configured to transmit the data over a specific network. Any suitable network protocol(s) may be used. The network interface allows the camera to communicate with a monitoring station or an administrative station adapted to configure the camera.

The storage device 770 is adapted to store depth, image or video data acquired by the sensors as well as compressed image or video data.

While the sensors, optics and electronics are described in one and the same housing, however as mentioned above, this is not mandatory; they could be provided in different housings. Additionally, calculations that place a substantial burden on the resource of a processor may be offloaded to a separate and dedicated computing device such as a computer. For example, the definition and drawing of the masking map may be done on a separate computer connected to the camera via network. The separate computer (e.g., PC) receives depth data and image data of the scene acquired by the distance measuring sensor and the other image sensors. That may allow the user to use computational complex virtual reality methods to configure the masking map or to run computational demanding image analysis algorithms to detect structures in the scene to support the user in configuring the masking map.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

Additional embodiments and aspects of the invention will be described which can be used individually or in combination with the features and functionalities described herein.

In accordance with a first aspect, a surveillance system may comprise: a visual sensor configured to capture a visual image of a scene; a thermal sensor configured to capture a thermal image of the scene; a distance measuring sensor configured to capture a distance image of the scene, the scene comprising an allowed region and a restricted region; and a processor configured to generate a combined image based on the visual image, the thermal image and the distance image, wherein an object in the scene is displayed as a representation in a visual image when in the allowed region and displayed as a representation in a thermal image when in the restricted region.

In accordance with a second aspect when referring back to the first aspect, in the surveillance system, the visual sensor, the thermal sensor and the distance measuring sensor may be located in a single camera.

In accordance with a third aspect when referring back to the first aspect, in the surveillance system, the distance measuring sensor may comprise a plurality of measuring sensors.

In accordance with a fourth aspect when referring back to the first aspect, in the surveillance system, the distance measuring sensor may be a time of flight sensor.

In accordance with a fifth aspect when referring back to the first aspect, in the surveillance system, the distance measuring sensor may be a stereoscopic sensor.

In accordance with a sixth aspect when referring back to the first aspect, in the surveillance system, the distance measuring sensor may be a structured light sensor.

In accordance with a seventh aspect when referring back to the first aspect, in the surveillance system, the distance measuring sensor may be a light detection and ranging (LiDAR) sensor.

In accordance with an eight aspect when referring back to the first aspect, in the surveillance system, when the object is in the restricted region, the object may only be displayed as the representation in the thermal image when the object is detected being within a defined temperature range.

In accordance with a ninth aspect when referring back to eighth aspect, in the surveillance system, the defined temperature range may be a temperature between 30° Celsius and 40° Celsius.

In accordance with a tenth aspect, a method for surveilling a scene having an allowed region and a restricted region may comprise: capturing a visual image of a scene; capturing a thermal image of the scene; capturing a distance image of the scene, the scene comprising an allowed region and a restricted region; and generating a combined image based on the visual image, the thermal image and the distance image, wherein an object in the scene is displayed as a representation in a visual image when in the allowed region and displayed as a representation in a thermal image when in the restricted region.

In accordance with a eleventh aspect when referring back to the tenth aspect, in the method, when the object is in the restricted region, the object may only be displayed as the representation in the thermal image when the object has a temperature within a defined temperature range.

In accordance with a twelfth aspect when referring back to the eleventh aspect, in the method, the defined temperature range may be between 30° Celsius and 40° Celsius.

In accordance with a thirteenth aspect, when referring back to the tenth aspect, in the method, the visual image may be captured by a visual image sensor, the thermal image may be captured by a thermal image sensor, and the distance image may be captured by a distance measuring sensor.

In accordance with a fourteenth aspect when referring back to the thirteenth aspect, the method may further comprise: calibrating the visual image sensor, the thermal image sensor and the distance measuring sensor by assigning a pixel of the visual image to a measurement point and assigning a pixel of the thermal image to the measurement point for a plurality of measurement points, a plurality of pixels of the visual image and a plurality of pixels in the thermal image.

In accordance with a fifteenth aspect when referring back to the thirteenth aspect, the method may further comprise: recalibrating the visual image sensor, the thermal image sensor and the distance measuring sensor by identifying the object in defined time instances.

In accordance with a sixteenth aspect when referring back to the thirteenth aspect, the method may further comprise: calibrating the visual image sensor, the thermal image sensor and the distance measuring sensor without directly comparing the visual image to the thermal image.

In accordance with a seventeenth aspect when referring back to the thirteenth aspect, the method may further comprise: calibrating the visual image sensor and the thermal image sensor by directly comparing the visual image to the thermal image.

In accordance with an eighteenth aspect when referring back to the tenth aspect, in the method, generating the combined image may comprise: identifying the object based on the distance image of the scene; comparing the measured object with a three dimensional masking map; and determining whether the object is in the allowed region or the restricted region.

In accordance with a nineteenth aspect when referring back to the eighteenth aspect, the method may further comprise: displaying the object as the representation of the visual image with assigned and/or interpolated visual image pixels when the object is in the allowed region and displaying the object as representation of the thermal image with assigned and/or interpolated thermal image pixels when the object is in restricted region.

In accordance with a twentieth aspect, a camera may comprise: a processor; and a computer readable storage medium storing programming for execution by the processor, the programming including instructions to: capture a visual image of a scene; capture a thermal image of the scene; capture a distance image of the scene, the scene comprising an allowed region and a restricted region; and generate a combined image based on the visual image, the thermal image and the distance image, wherein an object in the scene is displayed as a representation in a visual image when in the allowed region and displayed as a representation in a thermal image when in the restricted region.

## Claims

1. A surveillance system comprising:
a visual sensor configured to capture a visual image of a scene;
a thermal sensor configured to capture a thermal image of the scene;
a distance measuring sensor configured to capture a distance image of the scene, the scene comprising an allowed region and a restricted region; and
a processor configured to generate a combined image based on the visual image, the thermal image and the distance image, wherein an object in the scene is displayed as a representation in a visual image when in the allowed region and displayed as a representation in a thermal image when in the restricted region.

2. The surveillance system according to claim 1, wherein the visual sensor, the thermal sensor and the distance measuring sensor are located in a single camera.

3. The surveillance system according to claim 1 or 2, wherein the distance measuring sensor comprises a plurality of measuring sensors.

4. The surveillance system according to any one of claims 1 to 3, wherein the distance measuring sensor is a time of flight sensor, a stereoscopic sensor or a structured light sensor.

5. The surveillance system according to any one of claims 1 to 3, wherein the distance measuring sensor is a light detection and ranging (LiDAR) sensor.

6. The surveillance system according to any one of claims 1 to 5, wherein, when the object is in the restricted region, the object is only displayed as the representation in the thermal image when the object is detected being within a defined temperature range, and, in particular, within a temperature range between 30° Celsius and 40° Celsius.

7. A method for surveilling a scene having an allowed region and a restricted region, the method comprising:
capturing a visual image of a scene;
capturing a thermal image of the scene;
capturing a distance image of the scene, the scene comprising an allowed region and a restricted region; and
generating a combined image based on the visual image, the thermal image and the distance image, wherein an object in the scene is displayed as a representation in a visual image when in the allowed region and displayed as a representation in a thermal image when in the restricted region.

8. The method according to claim 7, wherein, when the object is in the restricted region, the object is only displayed as the representation in the thermal image when the object has a temperature within a defined temperature range, and, in particular, within a temperature range between 30° Celsius and 40° Celsius.

9. The method according to claim 7 or 8, wherein the visual image is captured by a visual image sensor, wherein the thermal image is captured by a thermal image sensor, and wherein the distance image is captured by a distance measuring sensor, further comprising: calibrating the visual image sensor, the thermal image sensor and the distance measuring sensor by assigning a pixel of the visual image to a measurement point and assigning a pixel of the thermal image to the measurement point for a plurality of measurement points, a plurality of pixels of the visual image and a plurality of pixels in the thermal image.

10. The method according to claim 7 or 8, wherein the visual image is captured by a visual image sensor, wherein the thermal image is captured by a thermal image sensor, and wherein the distance image is captured by a distance measuring sensor, further comprising: recalibrating the visual image sensor, the thermal image sensor and the distance measuring sensor by identifying the object in defined time instances.

11. The method according to claim 7 or 8, wherein the visual image is captured by a visual image sensor, wherein the thermal image is captured by a thermal image sensor, and wherein the distance image is captured by a distance measuring sensor, further comprising: calibrating the visual image sensor, the thermal image sensor and the distance measuring sensor without directly comparing the visual image to the thermal image.

12. The method according to claim 7 or 8, wherein the visual image is captured by a visual image sensor, wherein the thermal image is captured by a thermal image sensor, and wherein the distance image is captured by a distance measuring sensor, further comprising: calibrating the visual image sensor and the thermal image sensor by directly comparing the visual image to the thermal image.

13. The method according to any of claims 7 to 12, wherein generating the combined image comprises: identifying the object based on the distance image of the scene; comparing the measured object with a three dimensional masking map; and determining whether the object is in the allowed region or the restricted region.

14. The method according to claim 13, further comprising displaying the object as the representation of the visual image with assigned and/or interpolated visual image pixels when the object is in the allowed region and displaying the object as representation of the thermal image with assigned and/or interpolated thermal image pixels when the object is in restricted region.

15. A camera
comprising: a processor; and
a computer readable storage medium storing programming for execution by the processor, the programming including instructions to:
capture a visual image of a scene;
capture a thermal image of the scene;
capture a distance image of the scene, the scene comprising an allowed region and a restricted region; and
generate a combined image based on the visual image, the thermal image and the distance image, wherein an object in the scene is displayed as a representation in a visual image when in the allowed region and displayed as a representation in a thermal image when in the restricted region.
